# EUROPÄISCHE PATENTSCHRIFT

(11) **EP 0 467 996 B1**
(45) Veröffentlichungstag und Bekanntmachung des Hinweises auf die Patenterteilung: **08.12.1993**
(21) Anmeldenummer: 90908467.5
(22) Anmeldetag: 07.06.1990
(51) Int. Cl.: B60R 19/36

(54) **STOSSAUFNAHMEEINRICHTUNG FÜR FAHRZEUGE**
SHOCK ABSORBER FOR MOTOR VEHICLES
AMORTISSEUR DE CHOCS POUR VEHICULES A MOTEUR

(30) Priorität: 10.06.1989 DE 3919031
(43) Veröffentlichungstag der Anmeldung: 29.01.1992
(73) Patentinhaber: WITT, Michael T., D-76275 Ettlingen (DE)
(72) Erfinder: WITT, Michael T., D-76275 Ettlingen (DE)
(74) Vertreter: Durm, Frank, Dipl.-Ing.
(86) Internationale Anmeldenummer: DE9000436
(87) Internationale Veröffentlichungsnummer: WO9014972

(56) Entgegenhaltungen:
- DE-A- 2 162 412
- DE-A- 2 725 772
- US-A- 1 777 342
- US-A- 3 804 447

## Beschreibung

Die Erfindung betrifft eine Stoßaufnahmeeinrichtung für Fahrzeuge mit sich paarweise kreuzenden Druckstäben zwischen der Stoßstange und den Fahrzeug-Längsträgern und mindestens einem Kraftregler.

Üblicherweise wird bei Unfällen die Aufprallenergie durch Deformationsarbeit in der Knautschzone von Fahrzeugen abgebaut. Abgesehen von den bereits bei geringen Aufprallgeschwindigkeiten erheblichen Beschädigungen an den Fahrzeugen, ist aufgrund der Faltenbildung in den Fahrzeug-Längsträgern die Energieaufnahme mit Kraftspitzen und hohen Verzögerungswerten der Fahrzeuginsassen verbunden, die zu Verletzungen und ab Aufprallgeschwindigkeiten von ca. 40̸ km/h bereits zum Tod führen können.

Schutzsysteme für Kraftfahrzeuge sind teilweise bereits im Einsatz und teilweise aus den Offenlegungsschriften DE-A-2 70̸9 428, DE-A-2 832 161, DE-A-2 239 872 und DE-A-3 642 979 bekannt. Deren Wirkung besteht darin, mittels Pralltöpfen bzw. Federelementen, einen Teil der Aufprallenergie von Kraftfahrzeugen in Reibungsenergie zu verwandeln. In der Patentschrift DE-C-2 755 888 ist ein stoßabsorbierendes Element beschrieben, das aus elastischem Kunststoff besteht. Die DE-A-2 725 772 beschreibt eine Stoßaufnahme einrichtung gemäß dem Oberbegriff des Anspruchs 1.

Derartige Schutzsysteme bieten jedoch konstruktionsbedingt nur die Möglichkeit, Aufprallenergien von Kraftfahrzeugen bis hin zu Geschwindigkeiten von ca. 8 km/h zu absorbieren. Da bei diesen Geschwindigkeiten jedoch auch bei Insassen von Fahrzeugen ohne derartige Systeme selten Verletzungen auftreten, tragen diese kaum zu einer Erhöhung der Sicherheit von Fahrzeuginsassen bei, sondern reduzieren lediglich Blechschäden bei leichten Unfällen.

Da die Aufprallenergie mit dem Quadrat der Aufprallgeschwindigkeit zunimmt, nehmen derartige Systeme bei höheren Aufprallgeschwindigkeiten nur einen geringen Teil der Aufprallenergie auf und der beanspruchte Deformationsweg wird nur sehr unvollkommen zum Energieabbau genutzt.

Der Erfindung liegt nun die Aufgabe zugrunde, eine Stoßaufnahmeeinrichtung zu schaffen, die bis zu hohen Aufprallgeschwindigkeiten eine deutliche Reduzierung der Unfallfolgen aller an einem Unfall beteiligten Personen und Fahrzeuge bewirkt.

Eine derartige Stoßaufnahmeeinrichtung soll geeignet sein, sowohl in Kraftfahrzeugen, Lastkraftwagen, Bussen und sonstigen schienen- bzw. nicht schienengebundenen Fahrzeugen oder nicht fahrbaren Vorrichtungen eingesetzt zu werden.

Zur Lösung dieser Aufgabe wird eine Stoßaufnahmeeinrichtung der eingangs genannten Gattung vorgeschlagen, die gemäß der Erfindung die im kennzeichenden Teil des Anspruches 1 genannten Merkmale aufweist. Demnach ist vorgesehen, daß ein runder Druckstab und ein U-Profil-Druckstab in der Mitte durch eine Welle gegeneinander drehbar verbunden sind und an den Enden der Druckstäbe drehbar mittels Zapfen die Reibungselemente befestigt sind, die auf Gleitflächen reiben, und die Gleitflächen an einem stoßstangenseitigen und einem fahrzeugseitigen Führungsprofil angeordnet sind, in deren Längsrichtung die Reibungselemente zwangsgeführt werden und das Steuerseil in mehreren Windungen um den runden Druckstab gewickelt ist, und die Enden des Steuerseils mit dem U-Profil-Druckstab und dem Kraftregler verbunden sind.

Weiterhin ist vorgesehen, daß einem Paar von Druckstäben jeweils ein Kraftregler zugeordnet ist, und bei einem versetzten oder schrägen Frontalaufprall auch das dem Stoß abgewandte Paar von Druckstäben zu einem Abbau der Aufprallenergie beiträgt, so daß bei einem heftigen versetzten Aufprall die Deformation des Fahrzeugs weniger kritisch bezüglich einer Beschädigung der Fahrgastzelle und des damit verbundenen Einklemmens von Fahrzeuginsassen ist.

Bei ca. 75 % der Frontalunfälle handelt es sich um einen versetzten Frontalaufprall, wobei die Gefahr einer Beschädigung der Fahrgastzelle und die damit verbundene Verletzungsgefahr der Fahrzeuginsassen insbesondere auf der stärker deformierten Fahrzeugseite größer als bei einem Frontalaufprall mit der ganzen Fahrzeugbreite ist. Durch die Erfindung wird diese Gefahr weitgehend eliminiert.

Die offene Seite des U-Profil-Druckstabes ist zu beiden Seiten der Drehachse entgegengesetzt angeordnet. Diese konstruktive Maßnahme bewirkt, daß - bei der aufprallbedingten gegenläufigen Drehung von rundem Druckstab und U-Profil-Druckstab um die Drehachse - der U-Profil-Druckstab in der Endstellung den runden Druckstab einschließlich der Windungen des Steuerseils umschließt, was zu einer kompakten Bauweise beiträgt.

Rückstellfedern und mindestens eine Kraftregler-Feder bewirken nach Beendigung eines Aufpralls und der Entlastung der Stoßstange in einer relativ langsamen Bewegung bei niedrigem Kraftniveau eine Rückstellung. Dies geschieht, bis die Reibungselemente im Ausgangszustand an den Anschlägen anliegen und erneut Aufprallenergie aufgenommen werden kann.

Auf diese Weise werden Insassen und Fahrzeug bei einem nachfolgenden Aufprall etwa in einem Massenunfall nochmals geschützt.

Nach einer weiteren Ausgestaltung der Erfindung ist vorgesehen, daß bei der Aufnahme von Aufprallenergie eine Verkleinerung des Winkels zwischen der Achse der Druckstäbe und der Achse der Führungsprofile erfolgt und der Reibungskoeffizient zwischen den Reibungselementen und den Gleitflächen in Bewegungsrichtung der Reibungselemente zunimmt. Dabei ist der Reibungskoeffizient jedoch in jeder Stellung der Reibungselemente kleiner als der Kehrwert des tangens des Winkels zwischen den Druckstäben und den Führungsprofilen, so daß ein Blockieren der Reibungselemente vor Erreichen der Endstellung verhindert wird. Mit dieser Ausgestaltung der Erfindung ist es möglich, die im Steuerseil auftretenden Kräfte zu beherrschen und einen groben Teil der Aufprallenergie durch Reibung zwischen den Reibungselementen und den Gleitflächen abzubauen.

Nach einem Merkmal der Erfindung sind das fahrzeugseitige Führungsprofil und das stoßstangenseitige Führungsprofil als biegesteife Rechteck- bzw. Profilträger ausgebildet. Hierdurch erfolgt auch bei einem versetzten oder schrägen Frontalaufprall die Übertragung der Deformationskraft über die gesamte Fahrzeugbreite. Zur Reduzierung der Einbaulänge in Fahrzeug-Längsrichtung ist vorgesehen, daß fahrzeugseitiges und stoßstangenseitiges Führungsprofil bei einem Aufprall klauenartig ineinandergedrückt werden.

Der Erzielung einer kompakten Bauweise dient eine Weiterbildung der Erfindung, wonach das Steuerseil an dem Ende, welches am Kraftregler befestigt ist, einen geringeren Durchmesser als an seinem höher belasteten anderen Ende aufweist.

Eine Weiterbildung der Erfindung sieht vor, daß die Führungsprofile, die Druckstäbe und die Zapfen eine selbsttragende Konstruktion darstellen und vorzugsweise aus glasfaserverstärkten Kunststoffen, kohlefaserverstärkten Kunststoffen oder anderen hochfesten, aber leichten Werkstoffen bestehen.

Nach einer Ausgestaltung der Erfindung ist vorgesehen, daß der Kraftregler ein Stoßdämpfer ist und dessen Kolben mit mindestens einem Druckminder-Ventil ausgestattet ist. Die auf das Steuerseil wirkende Widerstandskraft hängt damit von der Geschwindigkeit, der Masse und dem Hub des Kolbens ab.

Durch diese Maßnahme werden die auf das Steuerseil wirkende Widerstandskraft und damit die Deformationskraft - wenn dies erforderlich ist - äußerst gering gehalten und gewährleisten einen sanften Aufprall bei geringen Aufprallgeschwindigkeiten bzw. bei Kollisionen mit Fußgängern, Fahrradfahrern und anderen schwächeren Verkehrsteilnehmern.

Nach einer weiteren möglichen Ausgestaltung der Erfindung ist vorgesehen, daß die auf das Steuerseil wirkende Widerstandskraft elektronisch geregelt wird. Hierbei kann die jeweilige Verzögerung mit einem Beschleunigungssensor erfaßt und unter Berücksichtigung der momentanen Fahrzeuggeschwindigkeit die optimale Deformationskraft mittels einer hydraulischen, pneumatischen, elektronischen oder einer Kombination von o. g. Regelungen eingestellt werden.

Nach einem Merkmal der Erfindung ist vorgesehen, daß die Stoßstange in Fahrzeug-Längsrichtung an jeder Seite eine Nut aufweist, wobei je ein Fortsatz, der an der Karosserie angebracht ist, in diese Nut eingreift. Dadurch wird eine Führung der Stoßstange in Fahrzeug-Längsrichtung erreicht und einer Drehung der Stoßstange um eine Achse quer zur Fahrtrichtung entgegengewirkt.

Nach einem weiteren Merkmal der Erfindung kann an jedem Fahrzeug-Längsträger ein austauschbarer Längsträger-Vorsatz angebracht sein, der eine steile und stetige Kraft-Weg-Kennlinie aufweist. Hierbei ist es von Vorteil, wenn die Deformation des sich anschließenden Teils des Fahrzeug-Längsträgers erst nach vollständiger Deformation des Längsträger-Vorsatzes beginnt. Auf diese Weise lassen sich etwa im Stadtverkehr übliche Aufprallgeschwindigkeiten ohne größere Reparaturen beherrschen.

Nach einer Weiterbildung der Erfindung ist an dem stoßstangenseitigen Führungsprofil mindestens eine Spannvorrichtung befestigt, die bei einem Aufprall die Bewegung der Stoßstange auf einen Seilzug überträgt, der über eine Umlenkung auf mechanische Gurtstraffer wirkt und zu einer Reduzierung der Gurtlose in den Sicherheitsgurten führt. Zweckmäßigerweise ist die Umlenkung des Seilzuges am hinteren Teil des Fahrzeug-Längsträgers befestigt und erfährt während eines Aufpralls keine oder nur eine geringfügige Bewegung in Fahrzeug-Längsrichtung. Eine weitere Bewegung der Spannvorrichtung in Richtung der Fahrgastzelle wirkt auf einen Lenkrad-Seilzug, der das Lenkrad in Richtung der Lenkradachse proportional zur relativen Aufprallgeschwindigkeit vom Fahrer wegzieht. Hierdurch wird bewirkt, daß die Sicherheitsgurte bereits wenige Millisekunden nach Beginn des Aufpralls gespannt werden und die Fahrzeuginsassen vor einem unkontrollierten Vorschnellen schützen, das Lenkrad aber nur bei einem stärkeren Aufprall vom Fahrer weggezogen wird, so daß das Fahrzeug so lange wie nötig lenkfähig bleibt.

Eine Weiterbildung der Erfindung sieht vor, daß durch eine große Auslenkung der Spannvorrichtung in Fahrzeug-Längsrichtung eine Reißleine gespannt wird, die um die Umlenkung zu dem Ventil einer Gasdruckflasche führt und dieses Ventil bei einem schweren Unfall öffnet. Hierbei entweicht ein nicht-brennbares Gas wie Stickstoff oder Kohlendioxid in den Motorraum und verhindert einen möglichen Fahrzeugbrand.

Eine mögliche Weiterbildung der Erfindung sieht vor, daß deren Montage an fahrbaren oder stehenden Autobahn-Barrieren zum Schutz gegen auffahrende Fahrzeuge oder an feststehenden Gleisbarrieren zum Schutz gegen auffahrende Lokomotiven und Waggons erfolgen kann.

Ein entscheidender Vorteil der Erfindung besteht darin, daß bei einem Unfall die Energieaufnahme der Stoßaufnahmeeinrichtung mit zunehmender Aufprallgeschwindigkeit zunimmt.

Hierdurch wird der Anteil der Aufprallenergie, der durch die Stoßaufnahmeeinrichtung absorbiert wird, und je nach Ausführung und Aufprallgeschwindigkeit mehr als 50̸ % betragen kann, bei jeder möglichen Aufprallgeschwindigkeit maximiert. Dies gewährleistet gleichzeitig, daß die auf alle am Unfall beteiligten Fahrzeuginsassen wirkenden maximalen Verzögerungen deutlich reduziert werden, so daß das Risiko, schwer verletzt oder getötet zu werden, sinkt.

Ein weiterer Vorteil der Erfindung ist darin zu sehen, daß durch Reduzierung der Kräfte und Beschleunigungen, die auf schwächere Verkehrsteilnehmer, wie Fußgänger, Radfahrer usw. bei einem Unfall wirken, die Verletzungsschwere bei diesen - gegenüber einem Unfall mit einem herkömmlichen PKW - sinkt und die Überlebenswahrscheinlichkeit steigt.

Bei einem versetzten Frontalaufprall erfolgt die Aufnahme von Aufprallenergie über die gesamte Fahrzeugbreite, so daß die Gefahr, daß Fahrzeuginsassen aufgrund einseitig stark deformierter Knautschzonen eingeklemmt werden, reduziert wird.

Durch Umwandlung von Aufprallenergie in Reibungsenergie bei weitgehend konstantem Niveau der Deformationskraft wird der Schaden bei allen an einem Unfall beteiligten Fahrzeugen reduziert.

Angesichts steigender Unfallzahlen und einer nach wie vor zu hohen Zahl von Verkehrstoten und Verletzten ist der Erfindungsgegenstand geeignet, bei ausreichender Verbreitung zu einer deutlichen Reduzierung der Zahl der Unfallopfer beizutragen.

Zwei Ausführungsbeispiele der Erfindung werden nachfolgend anhand der Zeichnungen beschrieben. Es zeigen
Fig. 1 eine erfindungsgemäße Stoßaufnahmeeinrichtung mit zwei Paar Druckstäben in der Draufsicht,
Fig. 2 einen Querschnitt der Ausführung nach Fig. 1 entlang der Linie C - C,
Fig. 3 a eine schematische Draufsicht in der Endstellung unmittelbar nach der Aufnahme von Aufprallenergie,

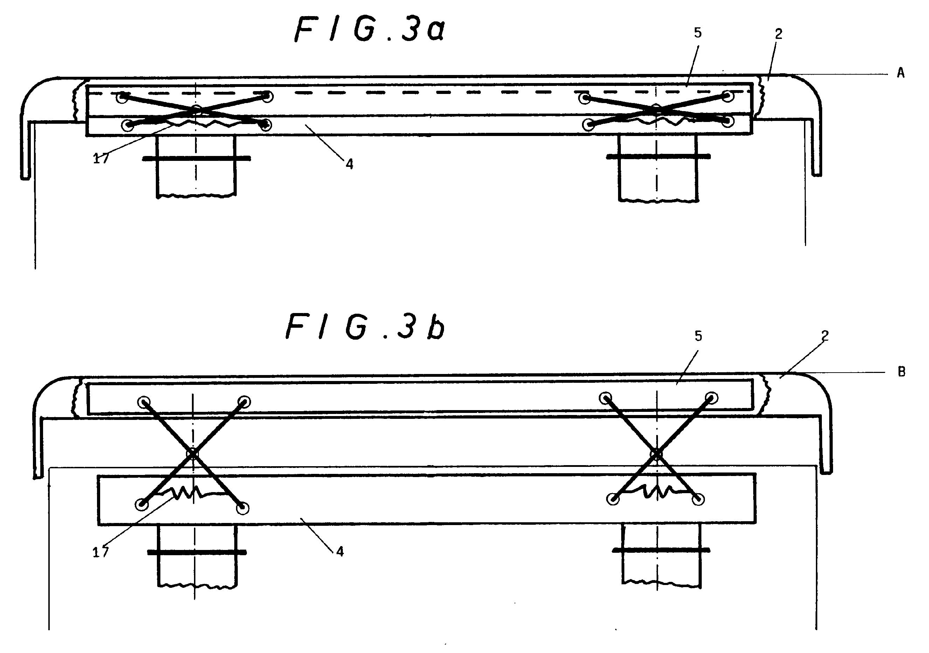

Fig. 3 b eine schematische Draufsicht in der Ausgangsstellung vor einem Aufprall sowie in der wiederhergestellten Ausgangsstellung mehrere Sekunden nach einem kleineren bis mittleren Unfall,

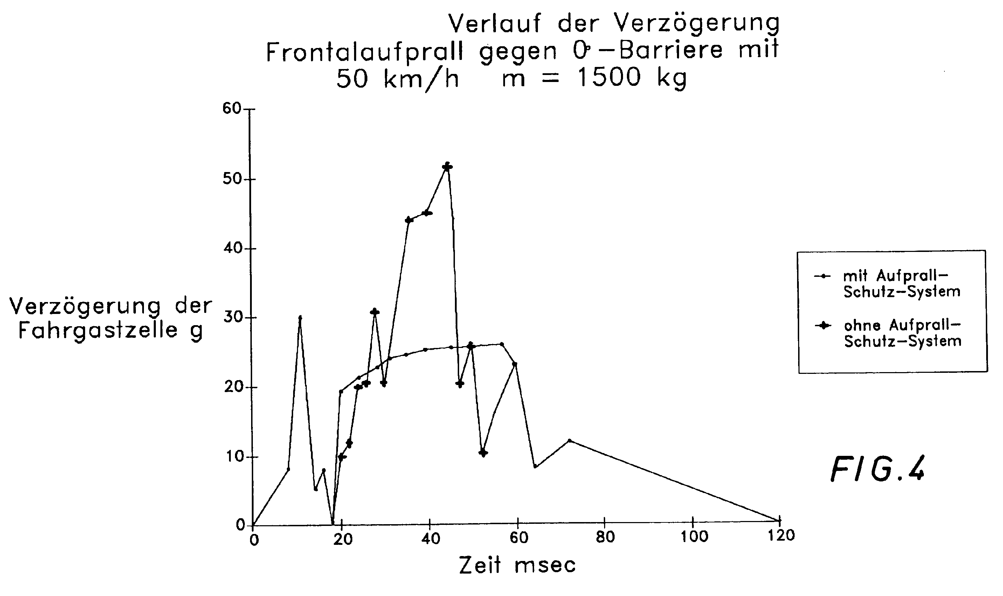

Fig. 4 typische Verläufe der Verzögerung von Fahrgastzellen mit und ohne Stoßaufnahmeeinrichtung.

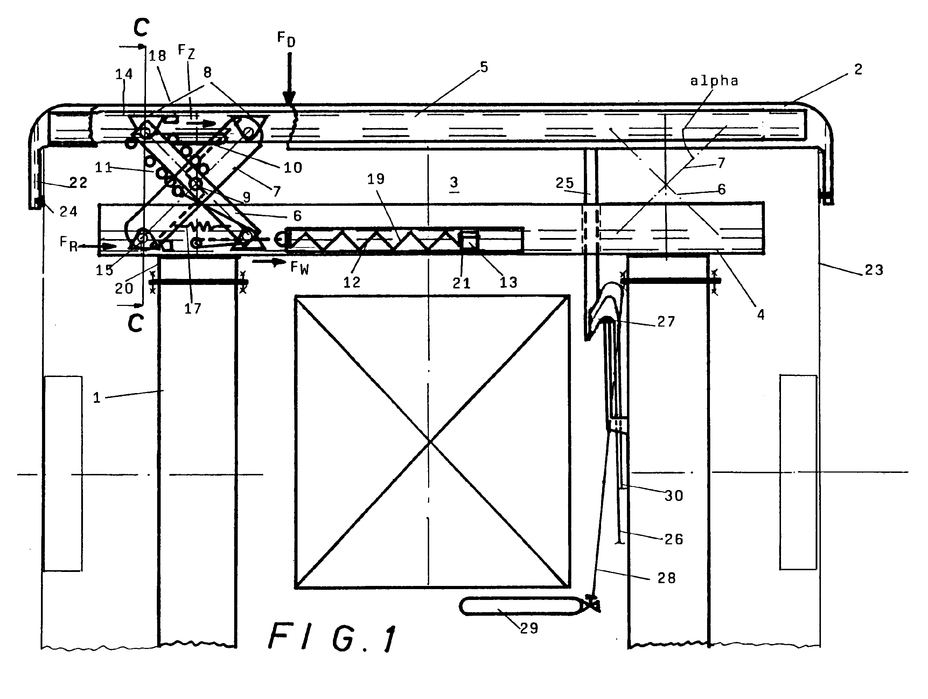

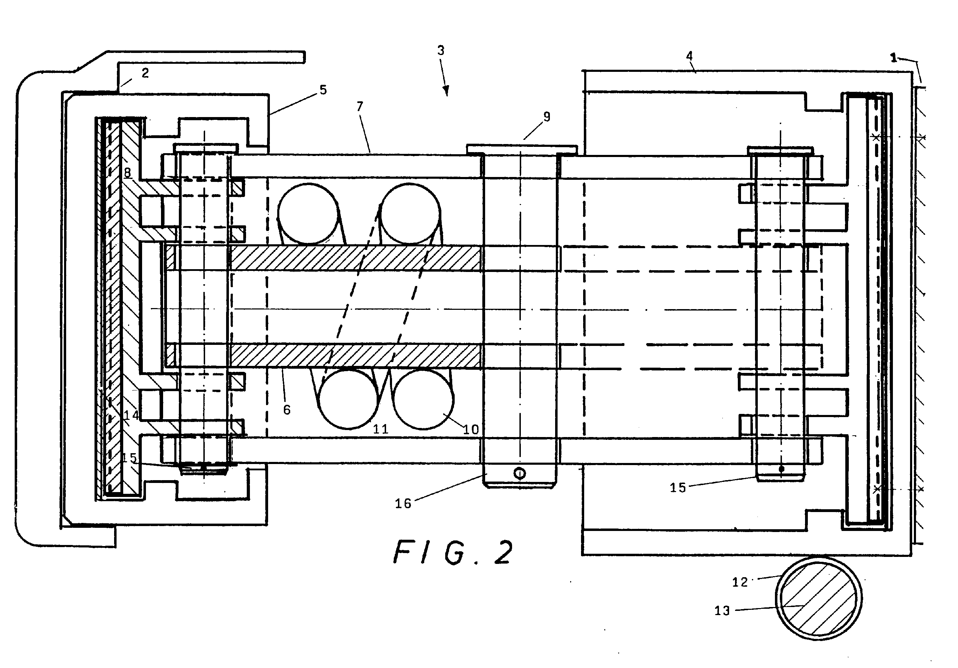

Gemäß Fig. 1 und Fig. 2 erstrecken sich das fahrzeugseitige Führungsprofil 4 und das stoßstangenseitige Führungsprofil 5 über die Breite des Fahrzeugs quer zur Fahrzeug-Längsrichtung, wobei das fahrzeugseitige Führungsprofil 4 an den Enden der FahrzeugLängsträger 1 und das stoßstangenseitige Führungsprofil 5 an der Stoßstange 2 befestigt ist.

Dazwischen sind paarweise der runde Druckstab 6 und der U-Profil-Druckstab 7 über Kreuz angeordnet. Diese sind um die Drehachse 9 gegeneinander drehbar angeordnet und durch die Welle 16 miteinander verbunden. Die Enden der Druckstäbe 6,7 sind drehbar in den Zapfen 15 gelagert.

An den Zapfen 15 sind Reibungselemente 8 befestigt, die auf Gleitflächen 14 an den Innenseiten der Führungsprofile 4,5 reiben und in deren Längsrichtung zwangsgeführt werden.

Um den runden Druckstab 6 ist in mehreren Windungen 11 das Steuerseil 10̸ gewickelt, dessen Enden mit dem U-Profil-Druckstab 7 und dem Kraftregler 12 verbunden sind. Der runde Druckstab 6 und der U-Profil-Druckstab 7 sind durch eine Rückstellfeder 17 miteinander verbunden, die die Stoßaufnahmeeinrichtung 3 in der Ausgangstellung gegen die Anschläge 18 fixiert.

Insbesondere aus Fig. 2 ist ersichtlich, daß das stoßstangenseitige Führungsprofil 5 und das fahrzeugseitige Führungsprofil 4 als biegesteife Rechteck-bzw. U-Profilträger ausgebildet sind und beim Zusammendrücken der Stoßaufnahmeeinrichtung 3 klauenartig ineinandergreifen.

Es ist ebenfalls ersichtlich, daß die offene Seite des U-Profil-Druckstabes 7 zu beiden Seiten der Drehachse 9 entgegengesetzt angeordnet ist und der U-Profil-Druckstab 7 in der Endstellung den runden Druckstab 7 einschließlich der Windungen 11 des Steuerseils 10̸ umschließt.

Der Kraftregler 12 weist einen Kolben 13 mit einem Druckminder-Ventil 21 und eine Kraftregler-Feder 19 auf. Auf jeder Seite der Stoßstange 2 erstreckt sich in Fahrzeug-Längsrichtung eine Nut 22, in die ein Fortsatz 24, der an der Karosserie 23 befestigt ist, eingreift. Die Nut 22 und der Fortsatz 24 bewirken eine Führung der Stoßstange 2 in Fahrzeug-Längsrichtung. Zwischen fahrzeugseitigem Führungsprofil 4 und Fahrzeug-Längsträger 1 ist der austauschbare Längsträger-Vorsatz 20̸ befestigt.

An dem stoßstangenseitigen Führungsprofil 5 ist eine Spannvorrichtung 25 befestigt, die auf einen Seilzug 26, auf einen Lenkrad-Seilzug 30̸ und auf eine Reißleine 28 wirkt. Die Führung des Seilzugs 26 und des Lenkrad-Seilzugs 30̸ zu Gurtstrammern bzw. zum Lenkrad erfolgt über eine Umlenkung 27, die am hinteren Teil des Fahrzeug-Längsträgers 1 befestigt ist.

Die Reißleine 28 führt über die Umlenkung 27 zum Ventil einer Gasdruckflasche 29.

In Fig. 1 sind weiterhin die auf die Stoßstange 2 wirkende Deformationskraft F_{D}, die an dem U-Profil-Druckstab 7 angreifende Zugkraft des Steuerseils F_{Z}, sowie die auf ein Reibungselement 8 wirkende Reibungskraft F_{R} und die am Kraftregler 12 auf das Steuerseil 10̸ wirkende Widerstandskraft F_{W} dargestellt.

In Fig. 3 a sind die Stoßstange 2 und das stoßstangenseitige Führungsprofil 5 in der Endstellung und unmittelbar nach der Aufnahme von Aufprallenergie dargestellt. Das stoßstangenseitige Führungsprofil 5 und das fahrzeugseitige Führungsprofil 4 sind ineinander geschoben. Die Rückstellfedern 17 sind vollständig gespannt.

In Fig. 3 b sind die Stoßstange 2 und das stoßstangenseitige Führungsprofil 5 in der Ausgangsstellung dargestellt, die im wesentlichen Fig. 1 entspricht. In dieser Stellung kann Aufprallenergie aufgenommen werden. Die Stellung entspricht ebenfalls der wiederhergestellten Ausgangsstellung mehrer Sekunden nach einem kleineren bis mittleren Unfall.

In Fig. 4 ist der Verlauf der Verzögerung der Fahrgastzelle eines mit dem Erfindungsgegenstand ausgestatteten Fahrzeugs im Vergleich zu einem konventionellen Fahrzeug der oberen Mittelklasse, bei einer Aufprallgeschwindigkeit von 50̸ km/h dargestellt. Deutlich erkennbar ist die mit dem Erfindungsgegenstand erzielbare Reduzierung der maximalen Verzögerung.

## Patentansprüche

1. Stoßaufnahmeeinrichtung für Fahrzeuge mit sich paarweise kreuzenden Druckstäben (6,7) zwischen der Stoßstange (2) und den Fahrzeug-Längsträgern (1) und mindestens einem Kraftregler (12), dadurch gekennzeichnet, daß ein runder Druckstab (6) und ein U-Profil-Druckstab (7) in der Mitte durch eine Welle (16) gegeneinander drehbar verbunden sind, und an den Enden der Druckstäbe Reibungselemente (8) drehbar mittels Zapfen (15) befestigt sind, und auf Gleitflächen (14) reiben, und die Gleitflächen (14) an einem stoßstangenseitigen Führungsprofil (5) und an einem fahrzeugseitigen Führungsprofil (4) angeordnet sind und die Reibungselemente (8) in deren Längsrichtung zwangsgeführt werden, und ein Steuerseil (10̸) in mehreren Windungen (11) um den runden Druckstab (6) gewickelt ist, und die Enden des Steuerseils (10̸) mit dem U-Profil-Druckstab (7) und dem Kraftregler (12) verbunden sind und einem Paar Druckstäben (6,7) jeweils ein Kraftregler (12) zugeordnet ist und die offene Seite des U-Profil-Druckstabes (7) zu beiden Seiten der Drehachse (9) entgegengesetzt angeordnet ist und bei der aufprallbedingten gegenläufigen Drehung von rundem Druckstab (6) und U-Profil-Druckstab (7) um die Drehachse (9) der U-Profil-Druckstab (7) in der Endstellung den runden Druckstab (6) einschließlich der Windungen (11) des Steuerseils (10̸) umschließt und nach Beendigung des Aufpralls und Entlastung der Stoßstange (2) Rückstellfedern (17) und mindestens eine Kraftregler-Feder (19) in einer langsamen Bewegung bei niedrigem Kraftniveau eine Rückstellung bewirken, bis die Reibungselemente (8) in der Ausgangsstellung an Anschlägen (18) anliegen und in diesem Zustand erneut Aufprallenergie aufgenommen werden kann.

2. Stoßaufnahmeeinrichtung nach Anspruch 1, dadurch gekennzeichnet, daß bei der Aufnahme von Aufprallenergie eine Verkleinerung des Winkels (alpha) zwischen der Achse der Druckstäbe (6,7) und der Achse der Führungsprofile (4,5) erfolgt, und der Reibungskoeffizient zwischen den Reibungselementen (8) und den Gleitflächen (14) in Bewegungsrichtung der Reibungselemente (8) zunimmt, und der Reibungskoeffizient in jeder Stellung der Reibungselemente (8) kleiner als der Kehrwert des tangens des Winkels (alpha) zwischen den Druckstäben (6,7) und den Führungsprofilen (4,5) ist und das Blockieren der Reibungselemente (8) vor Erreichen der Endstellung verhindert wird.

3. Stoßaufnahmeeinrichtung nach Anspruch 1 oder 2, dadurch gekennzeichnet, daß das fahrzeugseitige Führungsprofil (4) und das stoßstangenseitige Führungsprofil (5) als biegesteife Rechteck- bzw. U-Profilträger ausgebildet sind, und bei einem Aufprall klauenartig ineinander gedrückt werden.

4. Stoßaufnahmeeinrichtung nach einem der Ansprüche 1 bis 3, dadurch gekennzeichnet, daß das Steuerseil (10̸) an dem Ende, welches am Kraftregler (12) befestigt ist, einen geringeren Durchmesser als an seinem höher belasteten anderen Ende aufweist.

5. Stoßaufnahmeeinrichtung nach einem der Ansprüche 1 bis 4, dadurch gekennzeichnet, daß die Führungsprofile (4,5) die Druckstäbe (6,7) und die Zapfen (15) eine selbsttragende Konstruktion darstellen und vorzugsweise aus glasfaserverstärkten Kunststoffen, kohlefaserverstärkten Kunststoffen oder anderen hochfesten, aber leichten Werkstoffen bestehen.

6. Stoßaufnahmeeinrichtung nach einem der Ansprüche 1 bis 5, dadurch gekennzeichnet, daß der Kraftregler (12) ein Stoßdämpfer ist und dessen Kolben (13) mit mindestens einem Druckminder-Ventil (21) ausgestattet ist.

7. Stoßaufnahmeeinrichtung nach einem der Ansprüche 1 bis 6, dadurch gekennzeichnet, daß die auf das Steuerseil (10̸) wirkende Widerstandskraft F_{W} elektronisch geregelt wird.

8. Stoßaufnahmeeinrichtung nach einem der Ansprüche 1 bis 7, dadurch gekennzeichnet, daß die Stoßstange (2) in Fahrzeug-Längsrichtung an jeder Seite eine Nut (22) aufweist, und je ein Fortsatz (24), der an der Karosserie (23) angebracht ist, in diese eingreift.

9. Stoßaufnahmeeinrichtung nach einem der Ansprüche 1 bis 8, dadurch gekennzeichnet, daß an jedem Fahrzeug-Längsträger (1) ein austauschbarer Längsträger-Vorsatz (20̸) angebracht ist, der zweckmäßigerweise eine steile und stetige Kraft-Weg-Kennlinie aufweist.

10. Stoßaufnahmeeinrichtung nach einem der Ansprüche 1 bis 9, dadurch gekennzeichnet, daß an dem stoßstangenseitigen Führungsprofil (5) mindestens eine Spannvorrichtung (25) befestigt ist, die bei einem Aufprall eine Kraft auf einen Seilzug (26) überträgt, der über eine Umlenkung (27) auf mechanische Gurtstraffer wirkt, und zu einer Reduzierung der Gurtlose in den Sicherheitsgurten führt, und die Umlenkung (27) des Seilzuges (26) am hinteren Teil des Fahrzeug-Längsträgers (1) befestigt ist, und eine weitere Bewegung der Spannvorrichtung (25) in Richtung der Fahrgastzelle auf einen Lenkrad-Seilzug (30̸) wirkt, der das Lenkrad in Richtung der Lenkradachse proportional zur relativen Aufprallgeschwindigkeit vom Fahrer wegzieht.

11. Stoßaufnahmeeinrichtung nach einem der Ansprüche 1 bis 10̸, dadurch gekennzeichnet, daß bei einer groben Auslenkung der Spannvorrichtung (25) in Fahrzeug-Längsrichtung eine Reißleine (28) gespannt wird, die über die Umlenkung (27) zu dem Ventil einer Gasdruckflasche (29) führt, und dieses Ventil bei einem schweren Unfall öffnet und ein nicht brennbares Gas wie Stickstoff oder Kohlendioxid zur Verhinderung eines Fahrzeugbrandes in den Motorraum entweicht.

12. Stoßaufnahmeeinrichtung nach einem der Ansprüche 1 bis 11, dadurch gekennzeichnet, daß dessen Montage an fahrbaren oder stehenden Autobahn-Barrieren zum Schutz gegen auffahrende Fahrzeuge oder an feststehenden Gleisbarrieren zum Schutz gegen auffahrende Lokomotiven und Waggons erfolgen kann.

## Claims

1. Shock absorber for vehicles with pressure bars (6,7) which cross pairwise between the bumper bars (2) and the side members (1) of the vehicle and with at least one load controller (12), characterized in that a round pressure bar (6) and a U-profile pressure bar (7) are rotatably connected in their centre by a shaft (16), with friction elements (8) being rotatably fastened by bolts (15) to the ends of the pressure bars, rubbing against sliding surfaces (14), and the sliding surfaces (14) arranged on a guide profile (5) on the bumper bar side and on a guide profile (4) on the vehicle side, and the friction elements (8) are forcibly guided in their longitudinal direction, and a control cable (10) being wound several times (11) around the round pressure bar (6), and the ends of the control cable (10) connected with the U-profile pressure bar (7) and the load controller (12) and one load controller (12) each allocated to one pair of pressure bars (6,7) and the open side of the U-profile pressure bar (7) arranged at both sides of the rotary axis (9) in the opposite direction and with the counter rotation - caused by the impact - of round pressure bar (6) and U-profile pressure bar (7) around the rotary axis (9) the U-profile pressure bar (7) in its extreme position surrounds the round pressure bar (6) including the windings (11) of the control cable (10) and after the termination of the impact and after relieving the load from the bumper bars (2) the resetting springs (17) and at least one load controller spring (19) will effect in a slow motion and at a low power level a resetting, until the friction elements (8) will, in their starting position, be sitting close to the stops (18) and - in that status - impact energy can again be absorbed.

2. Shock absorber according to claim 1, characterized in that, during the absorption of the impact energy, a reduction of the angle (alpha) between the axis of the pressure bars (6,7) and the axis of the guide profiles (4,5) is effected, and the friction coefficient between the friction elements (8) and the sliding surfaces (14) increases in the moving direction of the friction elements (8), and the friction coefficient is, in any position of the friction elements (8), smaller than the reciprocal value of the tangens of the angle (alpha) between the pressure bars (6,7) and the guide profiles (4,5) and the blocking of the friction elements (8) is prevented before they reach their final position.

3. Shock absorber according to claim 1 or 2, characterized in that the guide profile (4) on the side of the vehicle and the guide profile (5) on the side of the bumper bars (5) are modelled as rectangular or U-profile members resistant to bending and that they are - during an impact - pressed or telescoped together.

4. Shock absorber according to one of claims 1 to 3, characterized in that the control cable (10) has, at the end fastened to load controller (12), a smaller diameter than it has at the other end which is more loaded.

5. Shock absorber according to one of claims 1 to 4, characterized in that the guide profiles (4,5), the pressure bars (6,7) and the bolts (15) represent a self-supporting structure, consisting preferably of glass-fibre-reinforced plastic, carbon-fibre-reinforced plastic or of other boil-proof yet light materials.

6. Shock absorber according to one of claims 1 to 5, characterized in that the load controller (12) is a shock absorber whose piston (13) is fitted with at least one pressure reducing valve (21).

7. Shock absorber according to one of claims 1 to 6, characterized in that the resistance Fw acting on control cable (10) is electronically controlled.

8. Shock absorber according to one of claims 1 to 7, characterized in that bumper bars (2) in the longitudinal direction of the vehicle,arefitted with a groove (22) at either side and that one extension (24) each, mounted to the car body (23), meshes with the groove.

9. Shock absorber according to one of claims 1 to 8, characterized in that,mounted to each side member (1) of the vehicle is an interchangeable adaptor (20) of the side member showing, appropriately, a steep and steady characteristic curve of the power path.

10. Shock absorber according to one of claims 1 to 9, characterized in that,mounted to the guide profile (5) on the side of the bumper bars is at least one clamping device (25) transferring, during an impact, a force to a cable pull (26) which, via a deviation (27) will act upon mechanical belt tighteners and leading to a reduction of loose belt members in the safety belts, with the deviation (27) of cable pull (26) fastened to the rear section of side member (1) of the vehicle,and a further motion of the clamping device (25) in the direction of the passenger compartment acting on a cable-pull of the steering wheel (30), the cable pull pulling away the steering wheel in the direction of the steering wheel axis, away from the driver, proportionally to the relative impact speed.

11. Shock absorber according to one of claims 1 to 10, characterized in that, with a wide deflection of the clamping device (25) in the longitudinal direction of the vehicle a rip cord (28) is mounted which, via deviation (27) leads to the valve of a pressure gas cylinder (29), opening the valve the moment a serious accident occurs, with the result that a non-combustible gas such as nitrogen or carbon dioxide escapes into the engine room so as to prevent any fire starting in the vehicle.

12. Shock absorber according to one of claims 1 to 11, characterized in that it can be mounted to mobile or stationary autobahn barriers provided as a protection against vehicles driying up or mounted to stationary track barriers for the protection of locomotives or railroad cars driving up against them.

## Revendications

1. Dispositif d'absorption de chocs pour véhicules, équipé de barres de compression (6, 7) se croisant par paire et disposées entre le pare-chocs (2) et les longerons (1) du véhicule, et d'au moins un régulateur de force (12), caractérisé en ce qu'une barre de compression ronde (6) et une barre de compression (7) profilée en U sont reliées en leur milieu par un arbre (16) de manière à pouvoir tourner en sens inverse l'une par rapport à l'autre, et des éléments de frottement (8) sont fixés aux extrémités des barres de compression au moyen de tourillons (15) de façon à pouvoir tourner et frottent sur des surfaces de glissement (14), et les surfaces de glissement (14) sont disposées sur un profilé de guidage (5) côté pare-chocs et sur un profilé de guidage (4) côté véhicule et les éléments de frottement (8) sont guidés positivement dans la direction longitudinale des profilés, en ce qu'un câble de commande (10) est enroulé sous forme de plusieurs spires (11) autour de la barre de compression ronde (6), et les extrémités du câble de commande (10) sont reliées à la barre de compression (7) profilée en U et au régulateur de force (12), et à chaque paire de barres de compression (6, 7) est associé un régulateur de force (12), et le côté ouvert de la barre de compression (7) profilée en U est disposé de façon opposée de part et d'autre de l'axe de rotation (9) et lors de la rotation, conditionnée par la collision, de la barre de compression ronde (6) et de la barre de compression (7) profilée en U en sens contraire l'une par rapport à l'autre autour de l'axe de rotation (9), la barre de compression (7) profilée en U enferme, dans la position finale, la barre de compression ronde (6) , y compris les spires (11) du câble de commande (10) et, à l'issue de la collision et de la décharge du pare-chocs (2), des ressorts de rappel (17) et au moins un ressort de régulateur de force (19) opèrent, par un déplacement lent, pour un faible niveau de force, un mouvement de retour jusqu'à ce que les éléments de frottement (8) prennent appui, dans la position de départ, contre des butées (18) et que dans cet état il puisse à nouveau être absorbé de l'énergie d'impact.

2. Dispositif d'absorption de chocs selon la revendication 1, caractérisé en ce que lors de l'absorption d'énergie d'impact il se produit un rapetissement de l'angle (alpha) entre l'axe des barres de compression (6, 7) et l'axe des profilés de guidage (4, 5), et le coefficient de frottement entre les éléments de frottement (8) et les surfaces de glissement (14) augmente dans le sens de mouvement des éléments de frottement (8), et le coefficient de frottement dans chaque position des éléments de frottement (8) est inférieur à la valeur inverse de la tangente de l'angle (alpha) entre les barres de compression (6,7) et les profilés de guidage (4, 5) et en ce que le blocage des éléments de frottement (8), avant que la position finale soit atteinte, est empêché.

3. Dispositif d'absorption de chocs selon la revendication 1 ou 2, caractérisé en ce que le profilé de guidage (4) côté véhicule et le profilé de guidage (5) côté pare-chocs sont réalisés sous la forme de poutres repectivement rectangulaire et profilée en U, rigides à la flexion, et sont poussés l'un dans l'autre à la manière de mâchoires lors d'une collision.

4. Dispositif d'absorption de chocs selon l'une quelconque des revendications précédentes, caractérisé en ce le câble de commande (10) présente, à son extrémité fixée au régulateur de force (12), un diamètre plus petit qu'à son autre extrémité soumise à une plus forte charge.

5. Dispostif d'absorption de chocs selon l'une quelconque des revendications précédentes, caractérisé en ce que les profilés de guidage (4, 5), les barres de compression (6, 7) et les tourillons (15) constituent une construction autoportante et sont de préférence réalisés en matières plastiques renforcées soit par des fibres de verre, soit par des fibres de carbone ou en d'autres matières à haute résistance mécanique mais légères.

6. Dispositif d'absorption de chocs selon l'une quelconque des revendicvations précédentes, caractérisé en ce que le régulateur de force (12) est un amortisseur dont le piston (13) est équipé d'au moins un détendeur de pression (21).

7. Dispositif d'absorption de chocs selon l'une quelconque des revendications précédentes, caractérisé en ce que la force de résistance F_{W} agissant sur le câble de commande (10) est réglée électroniquement.

8. Dispositif d'absorption de chocs selon l'une quelconque des révendications précédentes, caractérisé en ce que le pare-chocs (2) présente dans la direction longitudinale du véhicule de chaque côté une rainure (22) dans laquelle s'engage, également de chaque côté, une saillie (24) qui est rapportée à la carrosserie (23).

9. Dispositif d'absorption de chocs selon l'une quelconque des revendications précédentes, caractérisé en ce qu'à chaque longeron (1) du véhicule est rapportée une pièce de devant remplaçable (20), laquelle pièce présente avantageusement une courbe caractéristique force-trajet raide et continue.

10. Dispositif d'absorption de chocs selon l'une quelconque des revendications précédentes, caractérisé en ce qu'au profilé de guidage (5) côté pare-chocs est fixé au moins un dispositif tendeur (25) qui lors d'une collision transmet une force à un câble Bowden (26) qui, par l'intermédiaire d'un renvoi (27), agit sur des raidisseurs de ceinture mécaniques et conduit à une réduction du mou dans les ceintures de sécurité, et en ce que le renvoi (27) du câble Bowden (26) est fixé à la partie arrière du longeron (1) du véhicule, et un mouvement ultérieur du dispositif tendeur (25) en direction de l'habitacle agit sur un câble Bowden de volant (30) qui éloigne le volant de direction du conducteur, proportionnellement à la vitesse d'impact relative, en tirant le volant dans la direction de son axe.

11. Dispositif d'absorption de chocs selon l'une quelconque des revendications précédentes, caractérisé en ce que dans le cas d'une déviation importante du dispositif tendeur (25) dans la direction longitudinale du véhicule, une corde de déchirure (28) est tendue, laquelle mène, par l'intermédiaire du renvoi (27) à la valve d'une bouteille à gaz sous pression (29) et ouvre cette valve dans le cas d'un accident grave de sorte qu'un gaz incombustible, comme par exemple de l'azote ou du gaz carbonique s'échappe dans l'espace à moteur pour éviter que le véhicule ne prenne feu.

12. Dispositif d'absorption de chocs selon l'une quelconque des revendications précédentes, caractérisé en ce que le montage du dispositif peut s'effectuer sur des barrières déplaçables ou fixes d'autoroutes pour les protéger contre des véhicules susceptibles de les heurter ou sur des barrières fixes de voies ferrées pour les protéger contre des locomotives ou wagons qui les heurteraient.
